# EUROPEAN PATENT APPLICATION

(11) **EP 4 625 762 A1**
(43) Date of publication of application: **01.10.2025**
(21) Application number: 25157657.5
(22) Date of filing: 13.02.2025
(51) Int. Cl.: H02J 50/80, H02J 7/00, B60L 58/12, B60L 55/00, B60L 53/66, B60L 53/65, B60L 53/62, B60L 53/57, B60L 53/30, B60L 53/18, B60L 53/16, B60L 53/10, B60L 3/12

(54) **DISCHARGING CONTROL METHOD FOR VEHICLE CHARGING SYSTEM, DISCHARGING CONTROL DEVICE, AND VEHICLE**

(30) Priority: 28.03.2024 CN 202410376911
(71) Applicant: BYD Company Limited, Shenzhen, Guangdong 518118 (CN)
(72) Inventor: LING, Heping, 518118 Shenzhen (CN); YAN, Lei, 518118 Shenzhen (CN); NIU, Kangjian, 518118 Shenzhen (CN); YUAN, Shuai, 518118 Shenzhen (CN); YIN, Deqian, 518118 Shenzhen (CN)
(74) Representative: Mathys & Squire

(57) **Abstract**

The present disclosure discloses a discharging control method for a vehicle charging system, a discharging control device, and a vehicle. The method includes: When a discharging signal is obtained, a communication converter of a vehicle is switched to a power supply device communication controller mode to obtain charging information of a to-be-charged vehicle. The vehicle charging system charges the to-be-charged vehicle when the communication converter obtains the charging information of the to-be-charged vehicle. According to the discharging control method for a vehicle charging system, the discharging control device, and the vehicle provided in the present disclosure, the vehicle charging system may be used for discharging, to perform power replenishment on a to-be-charged vehicle. When the vehicle charging system obtains a discharging signal, a communication converter is switched to a power supply device communication controller mode to obtain charging information of the to-be-charged vehicle, and the to-be-charged vehicle is charged according to the charging information. In this way, an electric vehicle that breaks down on the road or in an extreme environment can be rescued.

## Description

### FIELD

The present disclosure relates to the field of electric vehicle technologies, and specifically, to a discharging control method for a vehicle charging system, a discharging control device, and a vehicle.

### BACKGROUND

As the population of electric vehicles increases, usage scenarios of the electric vehicles become increasingly extensive, and the convenience of replenishment of power batteries of the electric vehicles gradually become the focus of attention. Currently, an electric vehicle mainly replenishes a power battery through direct current charging piles. If an endurance mileage of a user during driving cannot support driving to a next charging pile, when the user encounters difficulties in extreme scenarios (wilderness, rivers, valleys, and the like), there may be a case that the user cannot continue to drive due to power battery depletion, resulting in a mobile replenishment requirement.

### SUMMARY

A series of concepts in simplified forms are introduced in the SUMMARY section, which will be further described in detail in the DETAILED DESCRIPTION section. The SUMMARY section of the present disclosure is not intended to limit key features and necessary technical features of the claimed technical solutions, nor is it intended to determine the protection scope of the claimed technical solutions.

The present disclosure provides a discharging control method for a vehicle charging system, including:
When a discharging signal is obtained, a communication converter of a vehicle is switched to a power supply device communication controller mode to obtain charging information of a to-be-charged vehicle.

The vehicle charging system charges the to-be-charged vehicle when the communication converter obtains the charging information of the to-be-charged vehicle.

Exemplarily, that a discharging signal is obtained includes:
A cable connected signal and a cable resistance are obtained.

The discharging signal is generated when a type of a connected cable is a discharging gun and a discharge trigger signal is obtained.

The type of the connected cable is determined according to the cable resistance.

Exemplarily, the discharging signal includes an external discharging readiness signal and a subnet interaction message.

That when a discharging signal is obtained, a communication converter of a vehicle is switched to a power supply device communication controller mode includes:

A charging and power distribution assembly of the vehicle outputs a control guidance function signal based on the external discharging readiness signal and the cable connected signal.

The communication converter is switched to the power supply device communication controller mode based on the control guidance function signal and the subnet interaction message.

Exemplarily, the charging information includes a charging status, a charging demand current, and a charging demand voltage. The charging status includes precharging, charging readiness, charging start, or charging end.

Exemplarily, that the vehicle charging system charges the to-be-charged vehicle when the communication converter obtains the charging information of the to-be-charged vehicle includes:

When the charging status is precharging, a direct current charging positive contactor and negative contactor are caused to be attracted to each other.

When the charging status is charging end, the direct current charging positive contactor and negative contactor are disconnected.

Exemplarily, that the vehicle charging system charges the to-be-charged vehicle when the communication converter obtains the charging information of the to-be-charged vehicle includes:

A motor controller of the vehicle reduces a discharge voltage of the vehicle when the charging status is precharging.

The motor controller regulates the discharge voltage of the vehicle in real time based on the charging demand current and/or the charging demand voltage when the charging status is charging start.

Exemplarily, that the vehicle charging system charges the to-be-charged vehicle when the communication converter obtains the charging information of the to-be-charged vehicle includes:

The communication converter is switched from the power supply device communication controller mode to an electric vehicle communication controller mode when the charging status is charging end.

Exemplarily, the method further includes:
An electric lock of a charging port is locked when the discharging signal is obtained.

The electric lock of the charging port is unlocked when the charging status is charging end.

The present disclosure further provides a discharging control device. The discharging control device includes:
a memory, a processor, and a computer program stored in the memory and executable on the processor. When the processor executes the computer program, the discharging control method for a vehicle charging system according to any one of the foregoing items is implemented.

The present disclosure further provides a vehicle. The vehicle includes the discharging control device described above.

According to the discharging control method for a vehicle charging system, the discharging control device, and the vehicle provided in the present disclosure, the vehicle charging system may be used for discharging, to perform power replenishment on a to-be-charged vehicle. When the vehicle charging system obtains a discharging signal, a communication converter is switched to a power supply device communication controller mode to obtain charging information of the to-be-charged vehicle, and the to-be-charged vehicle is charged according to the charging information. In this way, an electric vehicle that breaks down on the road or in an extreme environment can be rescued.

### BRIEF DESCRIPTION OF THE DRAWINGS

The following accompanying drawings of the present disclosure are used as a part of the present disclosure herein for understanding the present disclosure. Embodiments of the present disclosure and descriptions thereof are shown in the accompanying drawings and are used to explain the principle of the present disclosure.

In the accompanying drawings:
FIG. 1 is a flowchart of a discharging control method for a vehicle charging system according to an embodiment of the present disclosure;
FIG. 2 is a structural block diagram of the vehicle charging system according to an embodiment of the present disclosure;
FIG. 3 is a schematic diagram of a connection between a main vehicle and a to-be-charged vehicle according to an embodiment of the present disclosure;
FIG. 4 is a diagram of a first stage workflow of the vehicle charging system according to an embodiment of the present disclosure;
FIG. 5 is a diagram of a second stage workflow of the vehicle charging system according to an embodiment of the present disclosure; and
FIG. 6 is a diagram of a third stage workflow of the vehicle charging system according to an embodiment of the present disclosure.

### DETAILED DESCRIPTION

In the following description, numerous specific details are given to facilitate a more thorough understanding of the present disclosure. However, it is obvious to those skilled in the art that the present disclosure can be implemented without one or more of these details. In other examples, to avoid confusion with the present disclosure, some technical features known in the art are not described.

It should be understood that the present disclosure can be implemented in different forms and should not be construed as being limited to the embodiments presented herein. Conversely, these embodiments are provided for the purpose of making the disclosure thorough and complete, and conveying the scope of the present disclosure fully to those skilled in the art. In the accompanying drawings, for the sake of clarity, the sizes and relative sizes of layers and regions may be exaggerated. The same reference numerals denote the same elements throughout the present disclosure.

The terms used herein are merely for the purpose of describing specific embodiments and not as a limitation to the present disclosure. When used herein, the singular forms "a", "an", and "the" are also meant to include the plural form, unless otherwise clearly indicated in the context. It should also be understood that the terms "consisting of" and/or "comprising", when used in this specification, confirm the existence of the described features, integers, steps, operations, elements and/or components, but do not exclude the existence or addition of one or more other features, integers, steps, operations, elements, components and/or groups. As used herein, the term "and/or" comprises any and all combinations of related listed items.

For the purpose of thorough understanding of the present disclosure, detailed steps and detailed structures are to be presented in the following description to help elaborate the technical solutions proposed in the present disclosure. Exemplary embodiments of the present disclosure are described in detail below. However, besides these detailed descriptions, the present disclosure may further have other implementations.

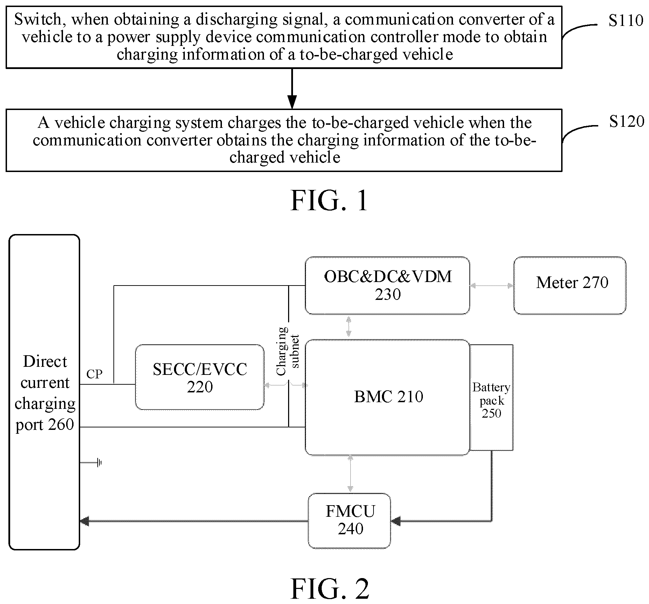

The present disclosure provides a discharging control method for a vehicle charging system. As shown in FIG. 1, the method includes:
Step S110: When a discharging signal is obtained, a communication converter of a vehicle is switched to a power supply device communication controller mode to obtain charging information of a to-be-charged vehicle.

Step S120: The vehicle charging system charges the to-be-charged vehicle when the communication converter obtains the charging information of the to-be-charged vehicle.

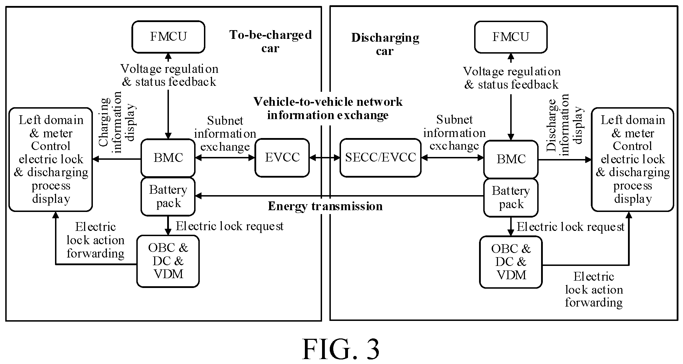

Referring to FIG. 2, a vehicle charging system of a main vehicle (also referred to as a discharging vehicle or a discharging car) includes a battery manager module (BMC) 210, a communication converter module (SECC/EVCC) 220, a charging and power distribution assembly module (OBC & DC & VDM) 230, a motor controller module (FMCU) 240, a battery pack 250, and a direct current charging port 260. Optionally, the vehicle charging system further includes a meter 270. Optionally, the vehicle charging system further includes a power domain controller (PDC). Referring to FIG. 3, a vehicle charging system of a to-be-charged vehicle (also referred to as a to-be-charged car) includes a battery manager module (BMC), a communication converter module (EVCC), a charging and power distribution assembly module (OBC & DC & VDM), a motor controller module (FMCU), a battery pack, and a direct current charging port. It should be noted that, the communication converter module of the discharging car includes at least a power supply device communication controller (SECC) mode and an electric vehicle communication controller (EVCC) mode, and the communication converter module of the to-be-charged car includes at least an electric vehicle communication controller (EVCC) mode. The direct current charging ports on the discharging car and the to-be-charged car are connected through a VTOV conductive connection cable (also referred to as a discharging gun), to complete a physical connection between the discharging car and the to-be-charged car, thereby implementing communication and energy transfer between the discharging car and the to-be-charged car.

In an embodiment, the communication converter module of the discharging vehicle may be switched between the SECC mode and the EVCC mode. When recognizing that the main vehicle needs to be charged, the communication converter module automatically invokes an EVCC function program to convert content of a CCS direct current charging standard at a charging pile end into a specific CAN message, and interacts with the BMC through a charging subnet. When recognizing that the main vehicle needs to perform VTOV discharging, the communication converter module automatically invokes an SECC function program, and starts to serve as an SECC of a charging pile to interact with the EVCC of the to-be-charged vehicle, to implement normal communication between the charging and discharging vehicles.

First, step S110 is performed, in which when the discharging signal is obtained, the communication converter of the vehicle is switched to the power supply device communication controller mode to obtain the charging information of the to-be-charged vehicle.

Exemplarily, that a discharging signal is obtained includes: A cable connected signal and a cable resistance are obtained. The discharging signal is generated when a type of a connected cable is a discharging gun and a discharge trigger signal is obtained. The type of the connected cable is determined according to the cable resistance.

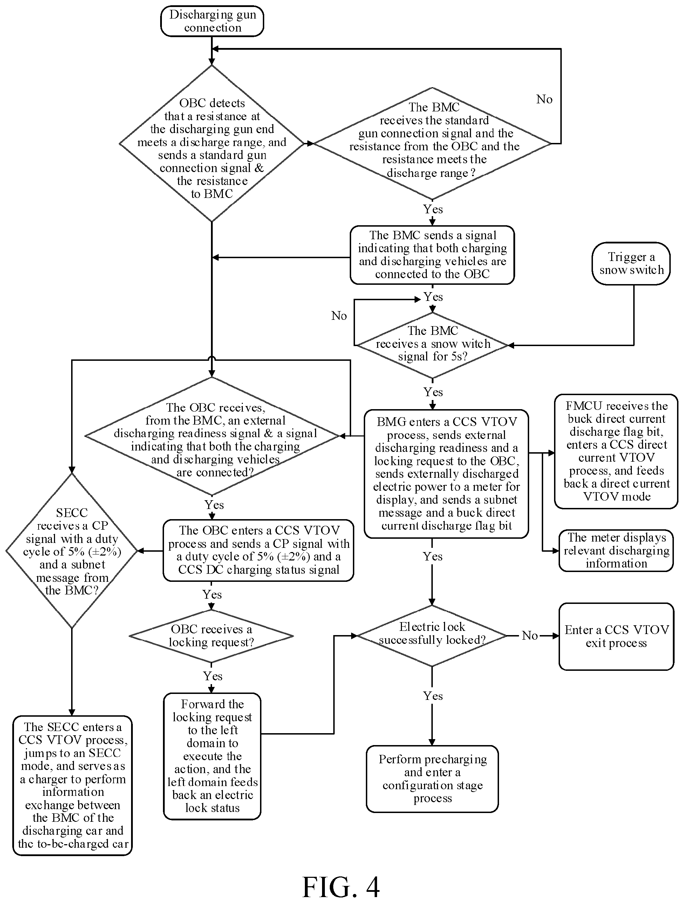

In an embodiment, referring to FIG. 4, after the VTOV conductive connection cable is connected to the direct current charging port, an onboard charger (OBC) in the charging and power distribution assembly module detects a resistance of a discharge end of the VTOV conductive connection cable, and sends the cable connected signal and the resistance to the BMC. The BMC receives the cable connected signal, and determines, based on a fact that the resistance meets a discharge resistance range, that the connected cable is a discharging gun. The discharge resistance may be any value outside a resistance range of a charging gun, for example, 3.3 k. In other words, there is no intersection between the resistance range of the discharging gun and the resistance range of the charging gun. Therefore, the BMC may determine, according to the cable resistance, whether the type of the cable is a charging gun or a discharging gun. Next, the BMC sends, to the OBC, a signal indicating that both the charging and discharging vehicles are connected. The BMC further receives a discharge trigger signal. The discharge trigger signal includes, but is not limited to, a snow switch signal lasting 5s. The BMC enters a CCS direct current VTOV discharging process, sends an external discharging readiness signal and a charging port locking request to the OBC, sends a subnet interaction message to the communication converter, sends a buck direct current discharge flag bit to an FMCU, and sends discharging information to the meter.

In an embodiment, when receiving the buck direct current discharge flag bit, the FMCU enters a CCS direct current VTOV discharging process, and feeds back a signal flag indicating that the FMCU is currently in a VTOV state.

In an embodiment, the meter displays the discharging information. The discharging information includes, but is not limited to, externally discharged electric energy.

Exemplarily, that when a discharging signal is obtained, a communication converter of a vehicle is switched to a power supply device communication controller mode includes: A charging and power distribution assembly of the vehicle outputs a control guidance function signal based on the external discharging readiness signal and the cable connected signal. The communication converter is switched to the power supply device communication controller mode based on the control guidance function signal and the subnet interaction message.

In an embodiment, referring to FIG. 4, after the onboard charger (OBC) in the charging and power distribution assembly module receives, from the BMC, the external discharging readiness signal and the signal indicating that both the charging and discharging vehicle are connected, the OBC enters a CCS direct current VTOV discharging process, outputs a control guidance function (CP) signal with a duty cycle of 5% (±2%), and sends a CCS direct current charging status signal.

In an embodiment, referring to FIG. 4, when the communication converter receives the CP signal with the duty ratio of 5% (±2%) and the subnet interaction message, the communication converter enters a CCS direct current VTOV discharging process, jumps to the SECC mode, and serves as a charger to perform information exchange between the BMC of the discharging car and the to-be-charged car.

In an embodiment, referring to FIG. 4, when obtaining the discharging signal, the BMC further sends a locking request for an electric lock of the charging port to the OBC. When receiving the locking request, the OBC forwards the locking request to the discharging vehicle to perform an action. The discharging vehicle feeds back a status of the electric lock of the charging port. When receiving a signal indicating that the electric lock of the charging port is successfully locked, the BMC performs precharging and enters a procedure of a configuration stage (i.e., a second stage). If the locking of the electric lock of the charging port fails, the BMC enters a CCS direct current VTOV exit process.

Next, step S120 is performed, in which the vehicle charging system charges the to-be-charged vehicle when the communication converter obtains the charging information of the to-be-charged vehicle.

Exemplarily, that the vehicle charging system charges the to-be-charged vehicle when the communication converter obtains the charging information of the to-be-charged vehicle includes: When the charging status is precharging, a direct current charging positive contactor and negative contactor are caused to be attracted to each other. When the charging status is charging end, the direct current charging positive contactor and negative contactor are disconnected.

The charging information includes charging status information, and a charging demand current and/or a charging demand voltage. Further, the charging status information includes precharging, charging readiness, and charging start. When the discharging status is precharging, the direct current charging positive contactor and negative contactor are attracted to each other, and a motor controller of the vehicle reduces a discharge voltage of the vehicle.

In an embodiment, after the BMC enters the configuration stage, the SECC interacts with the to-be-charged car to obtain the charging information of the to-be-charged vehicle. The SECC parses out charging status information according to the charging information obtained from the to-be-charged vehicle, sends different subnet control instructions (precharging, charging readiness, charging start, and the like) to the BMC. The BMC feeds back the discharging status according to the subnet control instructions of the SECC, and performs contactor action control, FMCU voltage regulation control, and the like. The SECC receives the discharging status (precharging, discharging readiness, discharging start, and the like) fed back by the BMC, and determines a next status. When the SECC sends charging start, the BMC enters a discharge stage.

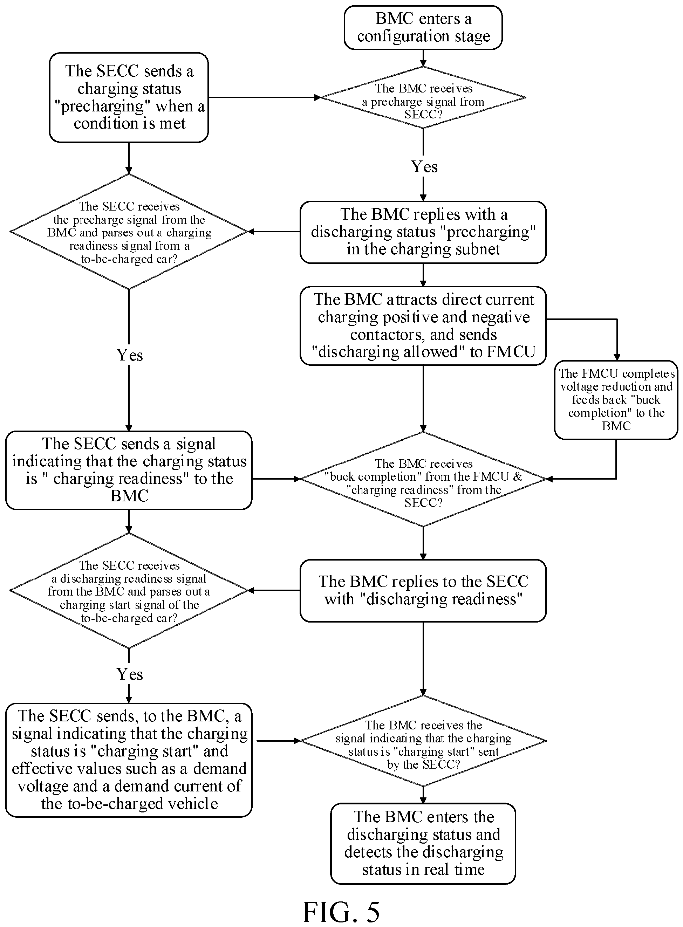

In an embodiment, as shown in FIG. 5, after the BMC enters the configuration stage, the SECC sends a charging status "precharging" when a condition is met. When receiving a precharge signal from the SECC, the BMC replies with a discharging status "precharging" in the charging subnet. Then, the BMC attracts the direct current charging positive and negative contactors, and sends "discharging allowed" to the FMCU. After receiving the precharge signal from the BMC and parsing out a charging readiness signal from the to-be-charged car, the SECC sends a signal indicating that the charging status is "charging readiness" to the BMC. The FMCU reduces a discharge voltage of the vehicle and feeds back a "buck completion" signal to the BMC. After receiving the buck completion signal from the FMCU and the charging readiness signal from the SECC, the BMC replies to the SECC with a discharging readiness signal. After the SECC receives the discharging readiness signal from the BMC and parses out the charging start signal of the to-be-charged car, the SECC sends, to the BMC, a signal indicating that the charging status is "charging start" and effective values such as a demand voltage and a demand current of the to-be-charged car. After the BMC receives the charging start signal from the SECC, the BMC enters a discharge stage (i.e., a third stage) and detects the discharging status in real time.

Exemplarily, that the vehicle charging system charges the to-be-charged vehicle when the communication converter obtains the charging information of the to-be-charged vehicle further includes: The motor controller regulates the discharge voltage of the vehicle in real time based on the charging demand current and/or the charging demand voltage when the charging status is charging start.

In an embodiment, during the discharging, the FMCU adjusts the discharge voltage of the discharging vehicle in real time according to the voltage and current demand values forwarded by the BMC, to meet voltage and current demands of the to-be-charged vehicle. In addition, the BMC and the SECC forward relevant discharging status signals in real time, for the to-be-charged car and the discharging car to confirm current charging and discharging statuses of each other. The BMC and the SECC further detect a stop condition in real time. When the stop condition is met, the SECC and the BMC immediately send a discharging stop signal to cause the discharging car and the to-be-charged car to enter corresponding stop processes and then exit the CCS direct current VTOV discharging process.

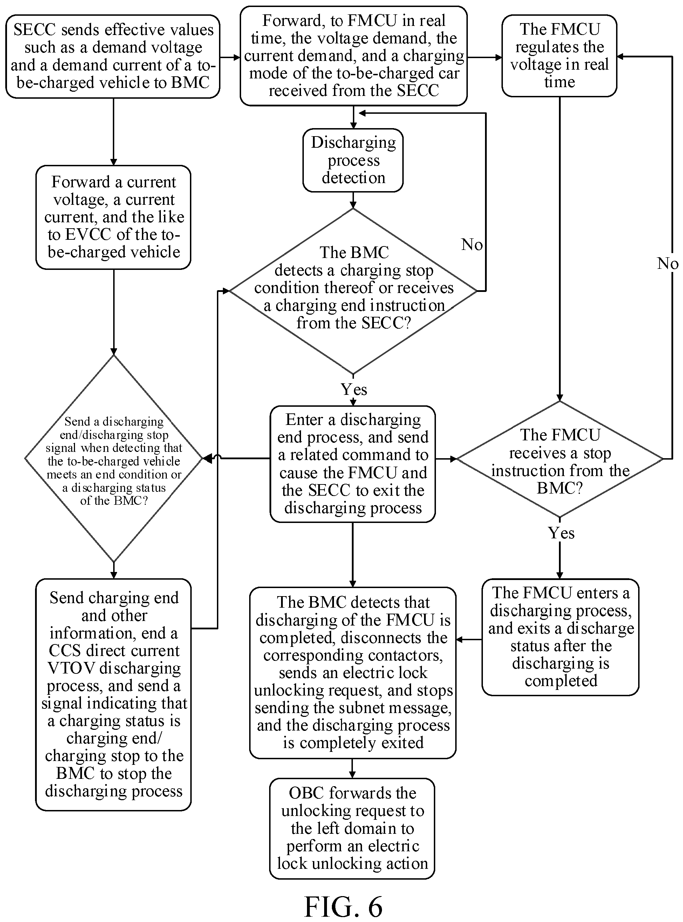

In an embodiment, as shown in FIG. 6, the SECC sends effective values such as a demand voltage and a demand current of the to-be-charged car to the BMC, and forwards a current voltage, a current current, and the like to the EVCC of the to-be-charged vehicle. The BMC forwards the voltage demand, the current demand, and a charging mode of the to-be-charged car to the FMCU in real time. The FMCU regulates the voltage in real time. Next, the BMC performs discharging process detection. When detecting a charging stop condition of the BMC or receiving a charging end instruction from the SECC, the BMC enters a discharging end process, and sends a related command to control the FMCU and the SECC to exit the discharging process. When detecting that the to-be-charged vehicle meets an end condition or the BMC feeds back the discharging status and sends a discharging end or discharging stop signal, the SECC sends "charging end" and other information, ends the CCS direct current VTOV discharging process, and sends a signal indicating that the charging status is charging end or charging stop to the BMC to stop the discharging process. When receiving the stop instruction from the BMC, the FMCU enters the discharging process, and exits the discharging status after the discharging is completed. The BMC detects that the discharging of the FMCU is completed, disconnects the corresponding contactors, sends an electric lock unlocking request, and stops sending the subnet message. The discharging process is completely exited. The OBC forwards the charging port unlocking request to the to-be-charged vehicle to perform an electric lock unlocking action.

Exemplarily, the discharging control method further includes the step of obtaining a discharging stop signal and switching the communication converter to an electric vehicle communication controller mode.

In an embodiment, after exiting the current discharging process, the SECC redetermines a VTOV entry condition. If the condition is not met, the EVCC mode is entered to prepare for vehicle pile communication. If the condition is met, the SECC is re-entered for a communication status between the discharging car and the to-be-charged car.

According to the discharging control method for a vehicle charging system provided in the present disclosure, the vehicle charging system may be used for discharging, to perform power replenishment on a to-be-charged vehicle. When the vehicle charging system obtains a discharging signal, a communication converter is switched to a power supply device communication controller mode to obtain charging information of the to-be-charged vehicle, and the to-be-charged vehicle is charged according to the charging information. In this way, an electric vehicle that breaks down on the road or in an extreme environment can be rescued.

According to an embodiment of the present disclosure, a discharging control device is further provided. The discharging control device includes a memory and a processor.

The memory stores program code used for implementing the corresponding steps in the discharging control method for a vehicle charging system according to the embodiments of the present disclosure.

The processor is configured to run the program code stored in the memory to perform the corresponding steps of the discharging control method for a vehicle charging system according to the embodiments of the present disclosure.

In addition, according to an embodiment of the present disclosure, a computer-readable storage medium is further provided. The storage medium stores program instructions. When the program instructions are run by a computer or a processor, the corresponding steps of the discharging control method for a vehicle charging system in the embodiments of the present disclosure are implemented. The computer-readable storage medium may include, for example, a storage component of a tablet computer, a hard disk of a personal computer, and a read-only memory (ROM), an erasable programmable read-only memory (EPROM), a portable compact disc read-only memory (CD-ROM), a USB memory, or any combination of the foregoing storage mediums. The computer-readable storage medium may be any combination of one or more computer-readable storage mediums. For example, one computer-readable storage medium includes computer-readable program code for randomly generating an action instruction sequence, and another computer-readable storage medium includes computer-readable program code for controlling crystal growth.

In addition, the present disclosure further provides a vehicle. The vehicle is equipped with the discharging control device 400 described above.

Although exemplary embodiments have been described with reference to the accompanying drawings, it should be understood that the above exemplary embodiments are only illustrative, and not intended to limit the scope of the present disclosure thereto. Various changes and modifications can be made by a person of ordinary skill in the art without departing from the scope and spirit of the present disclosure. All these changes and modifications are intended to be embraced in the scope of the present disclosure as defined in the appended claims.

A person of ordinary skill in the art may notice that the exemplary units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each specific application, but it should not be considered that the implementation goes beyond the scope of the present disclosure.

In the several embodiments provided in the present disclosure, it should be understood that the disclosed device and method may be implemented in other manners. For example, the described device embodiment is merely an example. For example, the unit division is merely logical function division and may be other division in actual implementation. For example, multiple units or components may be combined or integrated into another device, or some features may be ignored or not performed.

Numerous specific details are set forth in the specification provided herein. However, it can be understood that, the embodiments of the present disclosure may be practiced without the specific details. In some examples, known methods, structures, and technologies are not disclosed in detail, so as not to obscure understanding on the specification.

Similarly, it should be understood that to simplify the present disclosure and help understand one or more of disclosure aspects, in the descriptions of the exemplary embodiments of the present disclosure, features of the present disclosure are sometimes grouped into a single embodiment or figure, or descriptions thereof. However, the method of the present disclosure should not be construed as reflecting the following intention: The present disclosure claimed to be protected is required to have more features than those clearly set forth in each claim. More definitely, as reflected in the corresponding claims, the inventiveness of the disclosure lies in resolving the corresponding technical problem using features fewer than all features of a single embodiment disclosed above. Therefore, the claims following the specific implementation are hereby expressly incorporated into the specific implementation, with each claim standing on its own as a separate embodiment of the present disclosure.

A person skilled in the art may understand that, all features disclosed in this specification (including the accompanying claims, abstract, and drawings) and all processes or units of any method or device disclosed in such a way may be combined in any combination, unless the features are mutually exclusive. Unless otherwise explicitly stated, each feature disclosed in this specification (including the accompanying claims, abstract, and drawings) may be replaced with an alternative feature serving the same, equivalent, or similar purpose.

In addition, a person skilled in the art can understand that, although some embodiments herein include some but not other features included in other embodiments, combinations of features of different embodiments are meant to be within the scope of the present disclosure and to form different embodiments. For example, in the claims, any one of the claimed embodiments may be used in any combination.

Each component embodiment of the present disclosure may be implemented by hardware, or implemented by a software module running on one or more processors, or implemented by a combination thereof. A person skilled in the art should understand that in practice, a microprocessor or a digital signal processor (DSP) may be used to implement some or all functions of some modules in the discharging control device according to the embodiments of the present disclosure. The present disclosure may alternatively be implemented as an apparatus program (for example, a computer program and a computer program product) used to perform a part or all of the methods described herein. Such a program for implementing the present disclosure may be stored in a computer-readable medium, or may be in a form of one or more signals. Such a signal may be downloaded from an Internet website, or provided on a carrier signal, or provided in any other form.

It should be noted that the above-mentioned embodiments illustrate rather than limit the present disclosure, and a person skilled in the art may devise alternative embodiments without departing from the scope of the appended claims. In the claims, any reference signs placed between parentheses shall not be construed as limiting the claims. The word "comprise" does not exclude the presence of elements or steps not listed in the claims. The word "a" or "an" preceding an element does not exclude the presence of multiple such elements. The present disclosure can be implemented by way of hardware including several different elements and an appropriately programmed computer. In the unit claims enumerating several apparatuses, several of these apparatuses can be specifically embodied by the same item of hardware. The use of the words such as "first", "second", "third", and the like does not denote any order. These words can be interpreted as names.

The foregoing descriptions are merely specific implementations of the present disclosure or descriptions of the specific implementations, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A discharging control method for a vehicle charging system, comprising:
switching, when obtaining a discharging signal, a communication converter of a vehicle to a power supply device communication controller mode to obtain charging information of a to-be-charged vehicle; and
charging, by the vehicle charging system, the to-be-charged vehicle when the communication converter obtains the charging information of the to-be-charged vehicle.

2. The method according to claim **1,** wherein obtaining the discharging signal comprises:
obtaining a cable connected signal and a cable resistance; and
generating the discharging signal when a type of a connected cable is a discharging gun and a discharge trigger signal is obtained,
the type of the connected cable being determined according to the cable resistance.

3. The method according to claim 2, wherein the discharging signal comprises an external discharging readiness signal and a subnet interaction message, and
switching, when obtaining the discharging signal, the communication converter of the vehicle to the power supply device communication controller mode comprises:
outputting, by a charging and power distribution assembly of the vehicle, a control guidance function signal based on the external discharging readiness signal and the cable connected signal; and
switching the communication converter to the power supply device communication controller mode based on the control guidance function signal and the subnet interaction message.

4. The method according to claim 1, wherein the charging information comprises a charging status, a charging demand current, and a charging demand voltage, and the charging status comprises precharging, charging readiness, charging start, or charging end.

5. The method according to claim 4, wherein charging, by the vehicle charging system, the to-be-charged vehicle when the communication converter obtains the charging information of the to-be-charged vehicle comprises:
causing, when the charging status is precharging, a direct current charging positive contactor and negative contactor to be attracted to each other; and
disconnecting, when the charging status is charging end, the direct current charging positive contactor and negative contactor.

6. The method according to claim 4, wherein charging, by the vehicle charging system, the to-be-charged vehicle when the communication converter obtains the charging information of the to-be-charged vehicle comprises:
reducing, by a motor controller of the vehicle, a discharge voltage of the vehicle when the charging status is precharging; and
regulating, by the motor controller, the discharge voltage of the vehicle in real time based on the charging demand current and/or the charging demand voltage when the charging status is charging start.

7. The method according to claim 4, wherein charging, by the vehicle charging system, the to-be-charged vehicle when the communication converter obtains the charging information of the to-be-charged vehicle comprises:
switching the communication converter from the power supply device communication controller mode to a vehicle communication controller mode when the charging status is charging end.

8. The method according to claim 4, further comprising:
locking an electric lock of a charging port when obtaining the discharging signal; and
unlocking the electric lock of the charging port when the charging status is charging end.

9. A discharging control device, comprising:
a memory, a processor, and a computer program stored in the memory and executable on the processor, the discharging control method for a vehicle charging system according to any one of claims 1 to 8 being implemented when the processor executes the computer program.

10. A vehicle, comprising the discharging control device according to claim 9.
